# EUROPÄISCHE PATENTANMELDUNG

(11) **EP 2 282 095 A2**
(43) Veröffentlichungstag der Anmeldung: **09.02.2011**
(21) Anmeldenummer: 10171989.6
(22) Anmeldetag: 05.08.2010
(51) Int. Cl.: F16L 13/11

(54) **Vorrichtung und Verfahren zum Herstellen einer Verbindung zwischen zwei rohrförmigen Bauteilen**

(30) Priorität: 07.08.2009 DE 102009036591; 07.08.2009 DE 202009012173 U
(71) Anmelder: Franz Schuck GmbH, 89555 Steinheim (DE)
(72) Erfinder: Mack, Hans, 89537, Giengen (DE)
(74) Vertreter: Lorenz, Markus

(57) **Zusammenfassung**

Die Erfindung betrifft eine Vorrichtung und ein Verfahren zum Herstellen einer Verbindung zwischen zwei rohrförmigen Bauteilen (10, 12) mit einem hülsenartigen Verbindungselement (14), das auf mindestens ein Bauteil (10, 12) aufschiebbar ist und mindestens eine Tasche (16, 18), welche zu dem mindestens einen Bauteil (10, 12) hin offen ausgebildet ist, mindestens eine in die Tasche (16, 18) eingefügte Dichtung (20, 22) und mindestens eine Kammer (24) zur Aufnahme eines Füllmaterials (26) aufweist, wobei die Kammer (24) mit der mindestens einen Tasche (16, 18) und mindestens einem Befüllstutzen (28) in Verbindung steht. Erfindungsgemäß handelt es sich bei dem Füllmaterial (26) um ein expandierendes Material, das über den mindestens einen Befüllstutzen (28) in die mindestens eine Kammer (24) eingebracht wird.

## Beschreibung

Die Erfindung betrifft eine Vorrichtung zum Herstellen einer Verbindung zwischen zwei rohrförmigen Bauteilen mit einem hülsenartigen Verbindungselement, das auf mindestens ein Bauteil aufschiebbar ist und mindestens eine Tasche, die zu dem mindestens einen Bauteil hin offen ausgebildet ist, mindestens eine in die Tasche eingefügte Dichtung und mindestens eine Kammer zur Aufnahme eines Füllmaterials aufweist, wobei die Kammer mit der mindestens einen Tasche und mindestens einem Befüllstutzen in Verbindung steht nach der im

Oberbegriff von Anspruch 1 näher definierten Art. Die Erfindung betrifft ferner ein Verfahren zum Herstellen einer Verbindung zwischen zwei rohrförmigen Bauteilen, mit einer solchen Vorrichtung nach der im Oberbegriff von Anspruch 7 näher definierten Art.

Es gibt unterschiedliche Arten zwei Rohrleitungsteile miteinander zu verbinden. In der Regel sind die Enden der Rohrleitungsteile einander zugewandt und die Rohrleitungsteile fluchten im Wesentlichen miteinander. Üblicherweise verwendet man zur Verbindung ein hülsenartiges Verbindungselement, das beide Rohrenden umfängt und zwischen den beiden Rohrleitungsteilen eine Art Brücke herstellt. Zwischen dem Außenmantel jedes einzelnen Rohrendes und dem Innenmantel des hülsenartigen Verbindungselementes besteht stets ein mehr oder minder großer Ringspalt. Bei bekannten Ausführungsformen ist dieser Ringspalt bewusst erweitert, und zwar durch ringförmige Taschen im Verbindungselement, d.h. in dessen beiden, je ein Rohrende übergreifenden Endbereichen. Diese Taschen dienen zur Aufnahmen jeweils einer Dichtung.

Ein immer wieder auftretendes Problem besteht darin, die im Allgemeinen ringförmig eingelegte Dichtung so zu verspannen, dass der zwischen Verbindungselement und Rohr bestehende und dem offenen Rohrende zugewandte Ringspalt abgedichtet wird. Dieses Spannen oder Festpressen des Dichtungsringes in die entsprechende Tasche kann beispielsweise dadurch geschehen, dass die Dichtungen jeweils an eine äußere Wand der jeweiligen Tasche gedrückt werden, wobei eine gasdichte Abdichtung zwischen dem Verbindungselement und den Rohrleitungsteilen entsteht.

Eine Vorrichtung zum Herstellen einer Verbindung zwischen zwei rohrförmigen Bauteilen einer Gasleitung ist beispielsweise aus dem deutschen Gebrauchsmuster GM 72 02 657 bekannt. Die Vorrichtung umfasst ein hülsenartiges, einstückig mit einem ersten Bauteil ausgeführtes Verbindungselement, das auf ein zweites Bauteil aufschiebbar ist. Das Verbindungselement weist zwei zu dem zweiten Bauteil hin offen ausgebildete Taschen auf, in welche jeweils eine Dichtung eingefügt ist. Das Verbindungselement bildet eine Kammer zur Aufnahme eines Füllmaterials, die mit den Taschen und einem Einfüllstutzen in Verbindung steht. Bei dem Füllmaterial handelt es sich hierbei um eine unter Druck stehende Flüssigkeit. Der Einfüllstutzen wird über eine parallel zur Gasleitung angeordnete Hydraulikleitung permanent mit der unter Druck stehenden Flüssigkeit beaufschlagt. Hierdurch werden die beiden Dichtungen jeweils an eine äußere Wand der jeweiligen Tasche gedrückt, wobei eine gasdichte Abdichtung zwischen dem Verbindungselement und dem zweiten Bauteil entsteht. Durch ein Kontrollmanometer kann der Druck in der Hydraulikleitung kontrolliert werden.

In der Praxis besteht ein häufiges Problem solcher Vorrichtungen darin, dass zum Erreichen und Aufrechterhalten einer gasdichten Abdichtung zwischen dem Verbindungselement und den Bauteilen in der Regel ein hoher Aufwand und ein großer Bauraumbedarf erforderlich sind. Ferner sind die bekannten Vorrichtungen nicht geeignet, wenn der Gasdruck höher als 1 bar ist. Bei Gasdrücken höher als 1 bar lässt sich nicht mehr zuverlässig sicherstellen, dass die Dichtungen zwischen den Bauteilen (Rohren) und dem Verbindungselement gasdicht bleiben.

Die DE 28 42 227 C2 zeigt die bislang in der Praxis gängigste Vorrichtung zum Herstellen einer Verbindung zwischen zwei einander zugewandten Rohrenden. Dabei ist ein hülsenartiges Verbindungselement vorgesehen, das auf die beiden Rohrenden aufschiebbar ist. Das hülsenartige Verbindungselement weist dabei zwei Taschen auf, wobei jedem Rohrende eine Tasche zugeordnet ist. Vorgesehen ist je eine Dichtung, die zwischen dem entsprechenden Rohrende und dem Verbindungselement in die jeweilige Tasche eingefügt ist. Die aus der DE 28 42 227 C2 bekannte Vorrichtung eignet sich für Drücke bis zu ca. 1 bar.

Es ist daher Aufgabe der vorliegenden Erfindung, eine Vorrichtung und ein Verfahren zum Herstellen einer Verbindung zwischen zwei rohrförmigen Bauteilen bereitzustellen, mittels welchen mit verhältnismäßig geringem Aufwand eine beständig gasdichte Abdichtung zwischen dem Verbindungselement und den Bauteilen erreichbar ist.

Erfindungsgemäß wird diese Aufgabe durch eine Vorrichtung mit den in Anspruch 1 genannten Merkmalen und ein Verfahren mit den in Anspruch 7 genannten Merkmalen gelöst.

Der Hauptgedanke der Erfindung besteht darin, dass zum Befüllen der Kammer und somit zum Einpressen der mindestens einen Dichtung in die Tasche des Verbindungselementes ein expandierendes Material verwendet wird. Hierfür kann ein Fluid oder Schaum eingesetzt werden, der anschließend nach dem Einfüllen expandiert und sich verfestigt, z. B. durch eine Reaktion mit Luft. Das expandierende bzw. sich ausdehnende Material presst in vorteilhafter Weise die Dichtung über ihren gesamten Umfang derart an, dass auf eine weitere Anpressung verzichtet werden kann. Bei dem erfindungsgemäßen Material handelt es sich um ein kostengünstiges, universell einsetzbares Füllmaterial, das alle Geometrien umgeben kann. Das Füllmaterial fließt in alle Spalten bzw. Hohlräume und verteilt sich gut und schnell. Insbesondere passt sich das erfindungsgemäße Füllmaterial allen Unebenheiten bzw. Oberflächen unter Füllung aller Leerräume an und erzeugt eine zeitlich verzögerte Volumenvergrößerung, wodurch eine erwünschte Druckerhöhung in der Kammer erzeugt wird, die in vorteilhafter Weise als bleibende Anpresskraft auf die mindestens eine Dichtung wirkt. Bei dem Füllmaterial kann es sich um ein Dichtmittel handeln. Vorzugsweise handelt es sich bei dem expandierenden Material um ein Expansionsharz.

In Ausgestaltung der erfindungsgemäßen Vorrichtung steht die mindestens eine Kammer mit einer ersten Tasche (bzw. Sicke) zur Aufnahme einer Primärdichtung und einer zweiten Tasche (bzw. Sicke) zur Aufnahme einer Sekundärdichtung in Verbindung, wobei die Primärdichtung einen größeren Querschnitt als die Sekundärdichtung aufweist. In vorteilhafter Weise wird die einen größeren Querschnitt aufweisende Primärdichtung durch das sich ausdehnende Expansionsmaterial gegen eine Innenwand der Tasche des Verbindungselementes und eine Außenwand des Rohrleitungsteiles gepresst, wobei eine bleibende gasdichte Abdichtung zwischen dem Verbindungselement und den Bauteilen entsteht. Vorzugsweise hat die Sekundärdichtung dabei keine Gasabdichtungsfunktion, sondern verhindert lediglich eine weitere Ausbreitung des expandierenden Materials in Richtung der Trennstelle zwischen den beiden Bauteilen, da eine gasdichte Abdichtung an dieser Stelle nicht vorgesehen sein muss. Durch den kleineren Querschnitt der Sekundärdichtung wird die Schiebebewegung des Verbindungselementes beim Aufschieben auf das mindestens eine rohrförmige Bauteil in vorteilhafter Weise nicht unnötig erschwert.

Ergänzend oder alternativ kann auch vorgesehen sein, dass die die Primärdichtung aufnehmende Tasche einen gegenüber der Tasche für die Sekundärdichtung kleineren Querschnitt aufweist. In diesem Fall können die beiden Dichtungen gegebenenfalls einen identischen Querschnitt aufweisen.

Von Vorteil ist es, wenn die Primärdichtung weiter von der Tasche in Richtung auf das einzubringende rohrförmige Bauteil übersteht als die Sekundärdichtung.

Vorzugsweise weisen die Dichtungen im unverpressten Zustand einen im Wesentlichen kreisförmigen Querschnitt auf.

Bei den rohrförmigen Bauteilen kann es sich beispielsweise um eine Rohrleitung und/oder ein Flanschanschlusselement und/oder ein Verschlusselement handeln. Hierdurch ist in vorteilhafter Weise eine universelle Einsetzbarkeit der erfindungsgemäßen Vorrichtung gegeben. Die zu verbindenden Bauteile bzw. Rohrenden können ohne mechanische Formänderung der Rohrenden über die erfindungsgemäße Vorrichtung miteinander verbunden werden. Kostenintensive Formänderungen bzw. Formgebungen wie Bördeln und Verstricken der Rohrenden entfallen. Insbesondere können auch Rohrenden mit unterschiedlichen Durchmessern auf einfache Weise gasdicht miteinander verbunden werden.

In Abhängigkeit des zu verbindenden rohrförmigen Bauteils, insbesondere in Abhängigkeit, ob dieses als Rohrleitung und/oder als Flanschanschlusselement und/oder als Verschlusselement ausgebildet ist, kann vorgesehen sein, dass das hülsenartige Verbindungselement mit einem der beiden zu verbindenden Bauteile bereits einstückig ausgebildet oder bereits im Vorfeld durch Schweißen oder anderweitig verbunden ist. Insbesondere kann auch vorgesehen sein, dass es sich bei dem hülsenartigen Verbindungselement nur um einen sogenannten halben Überschieber handelt, d. h. dass nicht symmetrisch an beiden Seiten des hülsenartigen Verbindungselements ein Bauteil angebracht wird, sondern nur an einem Ende. In diesem Fall müssen auch nur an diesem Ende die Verbindungselemente bestehend aus Taschen, Kammer, Befüllöffnung und Dichtungen ausgebildet sein.

Aus dem allgemeinen Stand der Technik sind Muffenüberschieber zum beidseitigen Überschieben für gleiche Rohranschlussmaße bekannt. Ferner sind Muffenüberschieber zum beidseitigen Überschieben über Rohre bekannt, die unterschiedliche Rohrmaße aufweisen. Auch das erfindungsgemäße hülsenartige Verbindungselement kann eine Reduzierung aufweisen, so dass zumindest die Enden des hülsenartigen Verbindungselements, welche vorzugsweise über eine Schweißnaht mit den zu verbindenden Rohrenden verschweißt werden, einen an die Rohrenden angepassten Innendurchmesser aufweisen. Ferner sind aus dem allgemeinen Stand der Technik sogenannte halbe Überschieber bekannt, die einerseits zum Überschieben, andererseits zum Anschweißen mit einer Kehlnahtverschweißung oder einer V-Nahtschweißung ausgebildet sind. Auch die erfindungsgemäße Vorrichtung kann derart gestaltet sein. Ferner sind aus dem allgemeinen Stand der Technik halbe Überschieber bekannt, die einerseits zum Überschieben über ein Rohrende geeignet sind und andererseits eine bereits angeschweißte oder anschweißbare Verschlusskappe aufweisen. Auch die erfindungsgemäße Vorrichtung kann derart gestaltet sein.

Von Vorteil ist es, wenn das hülsenartige Verbindungselement über mindestens eine Schweißnaht mit mindestens einem Bauteil verbindbar ist. In weiterer Ausgestaltung der erfindungsgemäßen Vorrichtung besteht die mindestens eine Dichtung aus einem Material, welches derart ausgeführt ist, dass die Dichtung durch Hitze zerstörbar ist. Hieraus ergibt sich in vorteilhafter Weise eine einfache Möglichkeit zur Dichtigkeitsprüfung der mindestens einen Schweißnaht. Auf gefahrlose Weise ist ein Verschweißen der Rohrenden mit dem hülsenartigen Verbindungselement möglich, da die Verbindung zwischen den beiden gasführenden Bauteilen und dem hülsenartigen Verbindungselement vor dem Schweißen gasdicht ist. Insbesondere ist die Gefahr eines Unfalles mit der Folge von schweren Verbrennungen praktisch ausgeschlossen. Die über die erfindungsgemäße Vorrichtung verbundene Leitung kann nach nur kurzer Zeit wieder in Normalbetrieb genommen werden.

Vorzugsweise wird je eine Schweißnaht am äußeren Ende des Verbindungselements zwischen diesem und dem zugeordneten Rohrenden angelegt.

Das erfindungsgemäße Verfahren ermöglicht durch das Einbringen eines expandierendes Materials in die mindestens eine Kammer über den mindestens einen Befüllstutzen in besonders vorteilhafter Weise eine schnelle und sichere Reparatur bzw. einen schnellen und sicheren Austausch von Bauteilen, insbesondere von einer gasführenden Rohrleitung, da eine beständig gasdichte Verbindung der Bauteile gewährleistet ist. Je nach Lage des Befüllstutzens ist ein einfaches und schnelles Befüllen der Kammer sowohl unter- als auch oberirdisch möglich.

In Ausgestaltung des erfindungsgemäßen Verfahrens wird das Verbindungselement mit der mindestens einen in die mindestens eine Tasche eingelegten Dichtung auf das erste Bauteil aufgeschoben. Anschließend wird das zweite Bauteil an das erste Bauteil angelegt, wobei zwischen den Bauteilen eine spaltförmige Trennstelle entsteht. Dann wird das Verbindungselement so weit vom ersten Bauteil auf das zweite Bauteil geschoben, bis die Trennstelle zwischen den beiden Bauteilen im Wesentlichen in der Mitte des Verbindungselementes angeordnet ist. Dann wird das expandierende Material so lange in den mindestens einen Befüllstutzen eingebracht bzw. es wird eine derartige Menge des expandierenden Materials eingebracht, dass das expandierende Material aus dem Befüllstutzen dringt, und dann wird der Befüllstutzen verschlossen. In vorteilhafter Weise handelt es sich hierbei um einfach durchführbare Verfahrensschritte, die beispielsweise eine leichte Verschiebbarkeit des Verbindungselementes ermöglichen, so dass eine ideale Positionierung des Verbindungselementes über der Trennstelle auf den Bauteilen möglich ist. Anschließend können eine einfache und schnelle Befüllung der Kammer und ein ebenfalls schnelles Verschließen des Befüllstutzens erfolgen, wobei die gasdichte Abdichtung der Bauteilverbindung dabei automatisch erfolgt.

In weiterer Ausgestaltung des erfindungsgemäßen Verfahrens wird vor dem Aufschieben des Verbindungselementes mindestens ein (vorzugsweise zwei) aufblasbarer Absperrkörper in eine das erste rohrförmige Bauteil umfassende Rohrleitung eingebracht und aufgeblasen. In weiterer Ausgestaltung des erfindungsgemäßen Verfahrens wird nach dem Einbringen des mindestens einen Absperrkörpers die Rohrleitung hinter dem mindestens einen Absperrkörper oder zwischen zwei Absperrkörpern aufgetrennt, wobei ein erstes Rohrleitungsteil und ein weiteres Rohrleitungsteil entstehen. In vorteilhafter Weise können hierdurch Rohrleitungen, die im Niederdruckbereich, d.h. bei Drücken unterhalb von 16 bar betrieben werden, zeitweilig abgesperrt werden, um Reparaturen und/oder Verlängerungen durchzuführen. Das Verfahren eignet sich insbesondere für Drücke bis 4 bar. In der Regel wird mit zwei Absperrkörpern oder zwei Paaren von Absperrkörpern eine Sperrstrecke gebildet, innerhalb der eine Reparatur und/oder ein Austausch eines rohrförmigen Bauteiles oder eine Verlängerung oder Abzweigung der Gasleitung stattfinden kann. Derartige Absperrkörper werden nicht dauerhaft in eine Rohrleitung eingebaut, sondern lediglich als Hilfsmittel bei geplanten Reparaturen und/oder Verlängerungen genutzt, um den Gasfluss für eine bestimmte Zeitspanne zu unterbrechen.

In besonders vorteilhafter Weise wird nach dem Verschließen des Befüllstutzens der mindestens eine Absperrkörper aus dem ersten Rohrleitungsteil entfernt, um nach dem Entfernen des mindestens einen Absperrkörpers das Verbindungselement über mindestens eine Schweißnaht mit mindestens einem der beiden Bauteile gasdicht verbinden zu können. Hierdurch wird auf vorteilhafte Weise verhindert, dass der mindestens eine Absperrkörper durch die Hitze beim Schweißen zerstört wird.

Eine Möglichkeit zur Prüfung der Dichtigkeit der mindestens einen Schweißnaht kann dadurch umgesetzt werden, dass nach dem gasdichten Verbinden der Bauteile die mindestens eine in der Tasche aufgenommene Dichtung durch Aufbringen einer Schweißnaht auf die Tasche zerstört wird. Für die Prüfung der Dichtigkeit ist keine weitere kostenintensive stationäre Prüfeinrichtung notwendig, da keine ständige Überwachung der Dichtigkeit erforderlich ist.

Weitere vorteilhafte Ausgestaltungen und Weiterbildungen der Erfindung ergeben sich aus den weiteren abhängen Ansprüchen. Nachfolgend ist ein Ausführungsbeispiel der Erfindung anhand der Zeichnung prinzipmäßig dargestellt.

Es zeigen:
- Fig. 1: einen Längsschnitt durch ein Ausführungsbeispiel einer erfindungsgemäßen Vorrichtung zum Herstellen einer Verbindung zwischen zwei rohrförmigen Bautei- len mit einem hülsenartigen Verbindungselement;
- Fig. 2: einen Ausschnitt des hülsenartigen Verbindungsele- mentes aus Fig. 1 im Bereich einer Kammer, die zur Aufnahme eines expandierenden Materials dient; und
- Fig. 3: eine schematische Darstellung des Ausführungsbei- spiels des hülsenartigen Verbindungselements, wobei die obere Figurenhälfte einen Längsschnitt durch das Verbindungselement und die untere Figurenhälfte eine Seitenansicht auf das Verbindungselement zeigt.

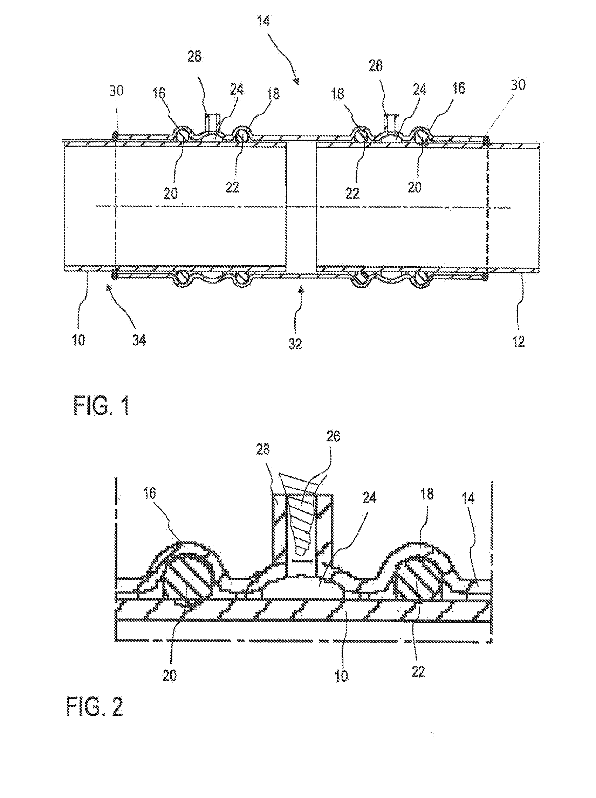

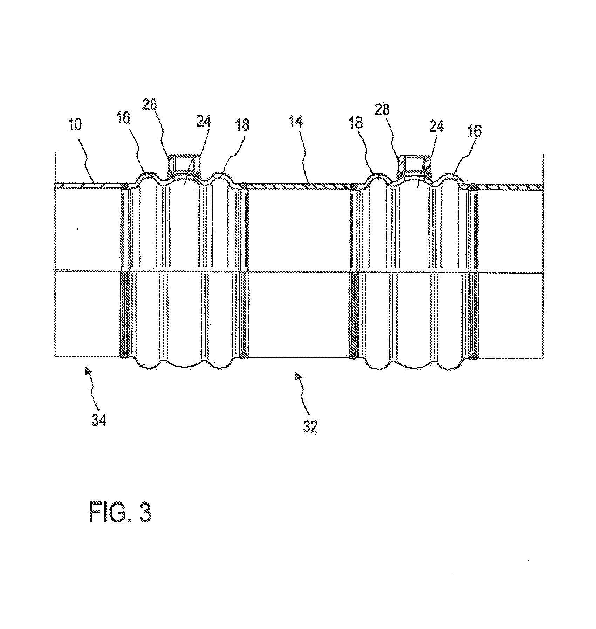

Fig. 1 bis 3 zeigen eine Vorrichtung zum Herstellen einer Verbindung zwischen zwei rohrförmigen Bauteilen 10, 12 mit einem hülsenartigen Verbindungselement 14, das im vorliegenden Ausführungsbeispiel vorzugsweise als Außenmuffe ausgeführt ist. Die Vorrichtung dient vorzugsweise zum Reparieren und/oder Verlängern einer Rohrleitung, die unter Gasdruck steht. Die Verbindung erfolgt zwischen zwei einander zugewandten Rohrenden der Bauteile 10, 12.

Das Verbindungselement 14 ist auf mindestens ein Bauteil 10, 12 aufschiebbar und weist mindestens eine, zu dem mindestens einen Bauteil 10, 12 hin offen ausgebildete Tasche 16, 18 auf, in die eine vorzugsweise ringförmige Dichtung 20, 22 eingelegt ist. Die Taschen 16, 18 sind in Form von ringförmig umlaufenden, sich nach außen wölbenden Sicken in die Bauteile 10, 12 eingebracht. Ferner weist das Verbindungselement 14 mindestens eine Kammer 24 zur Aufnahme eines Füllmaterials 26 auf, die mit der mindestens einen Tasche 16, 18 und mindestens einem Befüllstutzen 28 in Verbindung steht. Die Kammer 24 ist ringförmig umlaufend ausgebildet. Im vorliegenden Ausführungsbeispiel ist das Verbindungselement 14 auf zwei Bauteile 10, 12 aufgeschoben und weist insgesamt vier Taschen 16, 18 mit jeweils einer Dichtung 20, 22 und zwei Kammern 24 auf.

Das Verbindungselement 14 ist vorzugsweise aus Stahl gebildet.

Um eine Vorrichtung bereitzustellen, mittels welcher mit verhältnismäßig geringem Aufwand eine beständig gasdichte Abdichtung zwischen dem Verbindungselement 14 und den Bauteilen 10, 12 erreichbar ist, wird erfindungsgemäß vorgeschlagen, dass es sich bei dem Füllmaterial 26 um ein expandierendes Material handelt. Als Füllmaterial eignet sich dabei beispielsweise ein expandierender Schaum, wie beispielsweise ein Zwei-Komponenten-Expansionsharz, vorzugsweise mit einer Ausdehnung von mindestens 1:4. Hierfür besonders geeignet ist Tangit® oder ein entsprechendes Expansionsharz.

Vorzugsweise ist vorgesehen, dass das Füllmaterial 26 gleichmäßig in die Kammer 24 eingefüllt wird. Erreicht werden soll eine gleichmäßige Verteilung des Füllmaterials, welches sich dann nach dem Einfüllen aufgrund dessen expandierender Eigenschaft in der Kammer 24 und den Taschen 16 und 18 entsprechend verteilt. Im Allgemeinen ist es ausreichend, wenn das Füllmaterial 26 an einer Stelle in die Kammer 24 eingebracht wird. Gegebenenfalls kann es vorteilhaft sein, wenn sichergestellt wird, dass das Füllmaterial 26 an beiden Seiten der Kammer 24 von oben nach unten verläuft. Vorzugsweise wird eine derartige Menge des Füllmaterials 26 in die Kammer 24 eingefüllt, dass sichergestellt ist, dass das Füllmaterial 26, nachdem dieses expandiert, die gesamte Kammer 24 und die Taschen 16, 18 anteilig ausfüllt. Die Kammer 24 weist vorzugsweise eine Höhe und Breite auf, die sicherstellt, dass sich das Füllmaterial 26 vollständig und gleichmäßig verteilen kann. Darüber hinaus soll sichergestellt werden, dass die in der Kammer 24 sowie den Taschen 16, 18 enthaltene Luft ausdringen kann. Hierzu ist vorgesehen, dass ein Befüllstutzen 28 vorzugsweise an einem oberen Punkt des hülsenartigen Verbindungselements (wenn dieses mit den Rohrenden verbunden wird) angeordnet ist. Im Ausführungsbeispiel ist vorgesehen, dass die Breite der Kammer 24 vorzugsweise ca. 20 bis 40 mm beträgt. Die Höhe der Kammer 24 kann vorzugsweise 4 bis 20 mm, vorzugsweise 6 bis 10 mm (gerechnet am höchsten Punkt), betragen.

Das Füllmaterial 26 steigt, nachdem dieses so eingefüllt wurde, dass sich dieses am Boden der Kammer 24 gesammelt hat, auf, bis es aus dem Befüllstutzen 28 hervorquillt. Vorzugsweise wird eine Menge des Füllmaterials in die Kammer 24 eingefüllt, die ca. 20 bis 100 % größer ist als die Menge, die - nach der Expansion des Füllmaterials - an sich notwendig wäre, um die Kammer 24 vollständig zu verfüllen.

Im vorliegenden Ausführungsbeispiel stehen die beiden Kammern 24 jeweils mit einer ersten Tasche 16, die eine Primärdichtung 20 aufnimmt, und einer zweiten Tasche 18, die eine Sekundärdichtung 22 aufnimmt, in Verbindung, wobei die Primärdichtung 20 einen größeren Querschnitt als die Sekundärdichtung 22 aufweist. Die Primärdichtung 20 ragt - im unverpressten Zustand - weiter über den Rand der Tasche 16 in Richtung auf das Bauteil 10, 12 hinaus als die Sekundärdichtung 22. Die Dichtungen stehen somit im unverpressten Zustand leicht über den freien Querschnitt über. Vorzugsweise weist sowohl die Primärdichtung als auch die Sekundärdichtung eine Grundverpressung innerhalb der Tasche 16 bzw. 18 auf, wenn das entsprechende Rohrende eines Bauteils 10 oder 12 in das hülsenartige Verbindungselement 14 eingeschoben ist. Hieraus ergibt sich bereits eine Grunddichtigkeit. Der Grundverpressung sind jedoch Grenzen gesetzt, da bei einer zu hohen Grundverpressung die Kraft, die aufzubringen ist, um das hülsenartige Verbindungselement auf das Rohrende
zu schieben, zu groß wird. Es hat sich als geeignet herausgestellt, den Durchmesser der vorzugsweise kreisförmigen Primärdichtung um ca. 3 bis 5 mm größer zu gestalten als den Durchmesser der Tasche 16. Hinsichtlich der Sekundärdichtung hat es sich als vorteilhaft herausgestellt, einen geringeren Überschuss zu wählen, da dadurch die notwendige Kraft, um das hülsenartige Verbindungselement auf das Rohrende zu schieben, nicht unnötig erhöht wird und insbesondere da die Sekundärdichtung keine zwingend gasdichte Verbindung herstellen muss. Diese Funktion wird in Verbindung mit dem in die Kammer 24 eingefüllten Füllmaterial von der Primärdichtung 20 in der Tasche 16 übernommen.

Mindestens die Primärdichtung 20 besteht aus einem Material, welches derart ausgeführt ist, dass die Dichtung 20, 22 zumindest teilweise durch Hitze zerstörbar ist. Die mindestens eine Dichtung kann z. B. als Rolldichtung ausgebildet sein. Vorzugsweise ist die Dichtung aus Moosgummi gefertigt.

Bei den rohrförmigen Bauteilen 10, 12 kann es sich um eine Rohrleitung und/oder ein Flanschanschlusselement und/oder ein Verschlusselement handeln. Das hülsenartige Verbindungselement 14 kann über mindestens eine Schweißnaht 30 mit mindestens einem der Bauteile 10, 12 verbunden werden.

Das hülsenartige Verbindungselement 14 kann mit einem Bauteil 10 oder 12 einstückig ausgebildet bzw. über eine Schweißnaht oder anderweitig verbunden sein. In diesem Fall ist es ausreichend, wenn das Verbindungselement 14 zwei Taschen 16 und 18, eine Kammer 24 und einen entsprechenden Befüllstutzen 28 aufweist, um damit eine Verbindung zu dem anzubringenden Bauteil 12 oder 10 herzustellen.

Die Reparaturen und/oder Verlängerungen und/oder Verzweigungen einer Rohrleitung 34 werden mittels der erfindungsgemäßen Vorrichtung zum Herstellen einer Verbindung zwischen zwei rohrförmigen Bauteilen 10, 12 und vorzugsweise nach dem nachfolgend beschriebenen Verfahren durchgeführt.

Um ein Verfahren bereitzustellen, mittels welchen mit verhältnismäßig geringem Aufwand eine beständig gasdichte Abdichtung zwischen dem Verbindungselement 14 und den Bauteilen 10, 12 erreichbar ist, wird erfindungsgemäß vorgeschlagen, dass über den mindestens einen Befüllstutzen 28 ein expandierendes Material 26 in die mindestens eine Kammer 24 eingebracht wird.

Eine Ausführungsform des erfindungsgemäßen Verfahrens umfasst beispielsweise die folgenden Schritte:

In einem ersten Schritt erfolgt ein Aufschieben bzw. Überschieben des Verbindungselementes 14 mit der mindestens einen in die mindestens eine Tasche 16, 18 eingelegten Dichtung 20, 22 auf das erste Bauteil 10. Vorzugsweise wird dabei vor dem Aufschieben ein Schmiermittel auf das entsprechende Rohrende aufgebracht.

In einem zweiten Schritt erfolgt ein Anlegen des zweiten Bauteils 12 an das erste Bauteil 10, wobei zwischen den Bauteilen 10, 12 eine spaltförmige Trennstelle 32 entsteht.

In einem dritten Schritt erfolgt ein Zurückschieben des Verbindungselementes 14 vom ersten Bauteil 10 auf das zweite Bauteil 12 bis die Trennstelle 32 zwischen den beiden Bauteilen 10, 12 im Wesentlichen in der Mitte des Verbindungselementes 14 angeordnet ist.

In einem vierten Schritt erfolgt ein Einbringen des expandierenden Materials 26 in den mindestens einen Befüllstutzen 28 bis das sich ausdehnende Material 26 aus dem Befüllstutzen 28 dringt.

Hier nicht dargestellt, wird vor diesem Verfahrensschritt eine Befülleinrichtung vorzugsweise zumindest ein Stück weit in den Befüllstutzen 28 eingeführt. Eine derartige Befülleinrichtung kann in ihrem Aufbau prinzipiell einer so genannten Injektionspistole entsprechen, wie sie beispielsweise zur Injektion von Füllmaterial in Türrahmen eingesetzt wird. Die Befülleinrichtung kann beispielsweise in einem flexiblen Ausgabeelement enden, das je nach Bedarf entsprechend weit in die durch das Verbindungselement 14 gebildete ringförmig umlaufende Kammer 24 eingeführt werden kann.

Die durch das Verbindungselement 14 gebildete Kammer 24 füllt sich dabei vollständig mit expandierendem Material 26, so dass die einen größeren Querschnitt als die Sekundärdichtung aufweisende Primärdichtung 20 durch das sich ausdehnende Expansionsharz gegen eine Innenwand der Tasche 16 des Verbindungselementes 14 und eine Außenwand des Rohrleitungsteiles 10, 12 gepresst wird, wodurch eine gasdichte Abdichtung zwischen dem Verbindungselement 14 und den Bauteilen 10, 12 entsteht. Die Sekundärdichtung 22 hat im Ausführungsbeispiel keine Gasabdichtungsfunktion, sondern soll lediglich eine weitere Ausbreitung des expandierenden Materials 26 in Richtung der Trennstelle 32 verhindern. Eine gasdichte Abdichtung an dieser Stelle ist nicht vorgesehen, so dass durch den kleineren Querschnitt der Sekundärdichtung 22 die Schiebebewegung des Verbindungselementes 14 vor dem Einbringen des expandierenden Materials 26 nicht unnötig erschwert wird.

In einem weiteren Schritt erfolgt ein Verschließen des Befüllstutzens 28, z. B. durch Schweißen oder Verschrauben. Vorzugsweise wird zunächst ein Verschluss oder Stopfen eingeschraubt, welcher dann anschließend verschweißt wird.

Des Weiteren können vor dem Aufschieben des Verbindungselementes 14 vorzugsweise zwei aufblasbare Absperrkörper in eine das erste rohrförmige Bauteil 10 umfassende Rohrleitung 34 eingebracht und aufgeblasen werden. Mit zwei Absperrkörpern kann die Abdichtung verbessert werden. Dies eignet sich insbesondere bei Drücken über 1 bar. Gegebenenfalls kann durch den Einsatz von mehreren, vorzugsweise vier Absperrkörpern auch eine Sperrstrecke gebildet werden. Innerhalb der Sperrstrecke können eine Reparatur und/oder ein Austausch eines Bauteiles oder eine Verlängerung und/oder eine Verzweigung der Gasleitung stattfinden. Dies bedeutet, dass vor einem Auftrennen einer unter Gas stehenden Rohrleitung 34 über mindestens eine in der Rohrleitung 34 eingebrachte Bohrung mindestens ein Absperrkörper in die Rohrleitung 34 eingebracht und aufgeblasen wird, wobei die Bohrung und der Absperrkörper über eine spezielle, hier nicht dargestellte Vorrichtung, die auf die Rohrleitung 34 aufsetzbar ist, in die Rohrleitung 34 eingebracht werden.

Zusätzlich kann nach dem Einbringen des mindestens einen Absperrkörpers die Rohrleitung 34 hinter dem Absperrkörper oder zwischen zwei Absperrkörpern aufgetrennt werden, wobei ein erstes Rohrleitungsteil 10 oder 12 und ein weiteres Rohrleitungsteil entstehen.

Außerdem kann nach dem Verschließen des Befüllstutzens 28 der mindestens eine Absperrkörper aus dem ersten Rohrleitungsteil 10 oder 12 entfernt werden.

Des Weiteren kann nach dem Entfernen des mindestens einen Absperrkörpers das Verbindungselement 14 über mindestens eine Schweißnaht 30 mit mindestens einem der beiden Bauteile 10, 12 gasdicht verbunden werden. In vorteilhafter Weise wird der mindestens eine Absperrkörper vor dem Schweißprozess entfernt, da die Hitze beim Schweißen den Absperrkörper zerstören kann.

Zusätzlich kann nach dem gasdichten Verbinden mindestens die in die Tasche 16 aufgenommene Primärdichtung 20 durch Aufbringen einer Schweißnaht auf die Tasche 16 zumindest teilweise zerstört werden. Vorzugsweise werden alle Dichtungen 20, 22 und auch das Füllmaterial 26 wenigstens bereichsweise zerstört. Hierfür eignet es sich, wenn das Füllmaterial 26 aus einem Material besteht, das durch Hitze zerstört werden kann.

Des Weiteren kann die Dichtigkeit der mindestens einen Schweißnaht durch bekannte Verfahren geprüft werden.

In einer von der vorliegenden Erfindung unabhängigen Lösung kann auch vorgesehen sein, dass lediglich eine, vorzugsweise zwei Taschen zur Anbindung eines Rohrendes in dem hülsenartigen Verbindungselement 14 ausgebildet ist. Dabei kann anstelle der vorstehend beschriebenen Dichtung ein Schlauch, vorzugsweise ein dickwandiger Schlauch, beispielsweise ein Rollring, eingesetzt werden, der innen hohl ist. Nach dem Aufschieben des hülsenartigen Verbindungselements auf das Rohrende kann der Hohlraum des Schlauchs bzw. des Rollrings mit einem Gas, beispielsweise Luft, oder einen Fluid oder Schaum, bzw. einem Expansionsharz befüllt werden, so dass sich dessen Durchmesser vergrößert und sich der zwischen der Tasche und dem Rohrende eingebrachte Schlauch bzw. der Rollring so ausdehnt, dass dieser derart verpresst wird, dass eine gasdichte Verbindung entsteht. In diesem Fall ist keine Expansionskammer nötig. Bei dieser Lösung könnte es auch ausreichend sein, dass nur eine Dichtung pro Rohrende, d. h. auch nur eine Tasche, eingesetzt wird. Das Einbringen des Gases oder des Expansionsmittels (Fluid oder Schaum) in den Hohlraum des Schlauches oder des Dichtrings kann beispielsweise durch einen vorhandenen Zugang, der später verschlossen wird, erfolgen. Alternativ könnte das Gas, der Schaum oder das Fluid auch durch eine Spritze oder dergleichen eingebracht werden. Erreicht werden soll damit, dass sich der Schlauch oder der Dichtring ausdehnt und dadurch eine Verpressung zwischen der Tasche und dem Rohrende erfolgt. Denkbar wäre es auch, dass in dem Hohlraum bereits das Expansionsmittel vorhanden ist, beispielsweise ein Zweikomponentenmittel, welches durch einen äußeren Einfluss dazu gebracht wird, miteinander zu reagieren und zu expandieren. Hierbei handelt es sich um eine von der vorstehend beschriebenen Lösung unabhängige weitere erfinderische Lösung, welche selbstverständlich auch mit der vorstehend beschriebenen Lösung kombinierbar ist. Soweit sich dies nicht technisch ausschließt, können alle vorgenannten Merkmale auch bei dieser Erfindung optional realisiert werden.

## Patentansprüche

1. Vorrichtung zum Herstellen einer Verbindung zwischen zwei rohrförmigen Bauteilen (10, 12) mit einem hülsenartigen Verbindungselement (14), das auf mindestens ein Bauteil (10, 12) aufschiebbar ist und mindestens eine Tasche (16, 18), welche zu dem mindestens einen Bauteil (10, 12) hin offen ausgebildet ist, mindesten eine in die Tasche (16, 18) eingefügte Dichtung (20, 22) und mindestens eine Kammer (24) zur Aufnahme eines Füllmaterials (26) aufweist, wobei die Kammer (24) mit der mindestens einen Tasche (16, 18) und mindestens einem Befüllstutzen (28) in Verbindung steht,
**dadurch gekennzeichnet, dass**
es sich bei dem über den Befüllstutzen (28) in die mindestens eine Kammer (24) eingebrachten Füllmaterial (26) um ein expandierendes Material handelt.

2. Vorrichtung nach Anspruch 1,
**dadurch gekennzeichnet, dass**
es sich bei dem expandierenden Material (26) um ein Expansionsharz handelt.

3. Vorrichtung nach Anspruch 1 oder 2,
**dadurch gekennzeichnet, dass**
die mindestens eine Kammer (24) mit einer ersten Tasche (16) zur Aufnahme einer Primärdichtung (20) und einer zweiten Tasche (18) zur Aufnahme einer Sekundärdichtung (22) in Verbindung steht, wobei die Primärdichtung (20) einen größeren Querschnitt als die Sekundärdichtung (22) aufweist.

4. Vorrichtung nach einem der Ansprüche 1 bis 3,
**dadurch gekennzeichnet, dass**
es sich bei den rohrförmigen Bauteilen (10, 12) um eine Rohrleitung und/oder ein Flanschanschlusselement und/oder ein Verschlusselement handelt.

5. Vorrichtung nach einem der Ansprüche 1 bis 4,
**dadurch gekennzeichnet, dass**
das hülsenartige Verbindungselement (14) über mindestens eine Schweißnaht (30) mit dem mindestens einen Bauteil (10, 12) verbunden ist.

6. Vorrichtung nach einem der Ansprüche 1 bis 5,
**dadurch gekennzeichnet, dass**
die mindestens eine Dichtung (20, 22) aus einem Material besteht, welches derart ausgeführt ist, dass die Dichtung (20, 22) durch Hitze zerstörbar ist.

7. Verfahren zum Herstellen einer Verbindung zwischen zwei rohrförmigen Bauteilen (10, 12) mit einer Vorrichtung, welche insbesondere nach einem der Ansprüche 1 bis 6 ausgebildet ist, umfassend ein hülsenartiges Verbindungselement (14), das auf mindestens ein Bauteil (10, 12) aufschiebbar ist und mindestens eine Tasche (16, 18), welche zu dem mindestens einen Bauteil (10, 12) hin offen ausgebildet ist, mindestens eine in die Tasche (16, 18) eingefügte Dichtung (20, 22) und mindestens eine Kammer (24) zur Aufnahme eines Füllmaterials (26) aufweist, wobei die Kammer (24) mit der mindestens einen Tasche (16, 18) und mindestens einem Befüllstutzen (28) in Verbindung steht,
**dadurch gekennzeichnet, dass**
über den mindestens einen Befüllstutzen (28) ein expandierendes Material (26) in die mindestens eine Kammer (24) eingebracht wird.

8. Verfahren nach Anspruch 7,
**dadurch gekennzeichnet, dass**
- das Verbindungselement (14) mit der mindestens einen in die mindestens eine Tasche (16, 18) eingelegten Dichtung (20, 22) auf das erste Bauteil (10) aufgeschoben wird,
- das zweite Bauteil (12) an das erste Bauteil (10) angelegt wird, wobei zwischen den Bauteilen (10, 12) eine spaltförmige Trennstelle (32) entsteht,
- das Verbindungselement (14) so weit vom ersten Bauteil (10) auf das zweite Bauteil (12) geschoben wird, bis die Trennstelle (32) zwischen den beiden Bauteilen (10, 12) im Wesentlichen in der Mitte des Verbindungselementes (14) angeordnet ist,
- das eine derartige Menge des expandierenden Materials (26) in den mindestens einen Befüllstutzen (28) eingebracht wird, dass das sich expandierende Material (26) aus dem Befüllstutzen (28) dringt, und
- der Befüllstutzen (28) verschlossen wird.

9. Verfahren nach Anspruch 7 oder 8,
**dadurch gekennzeichnet, dass**
vor dem Aufschieben des Verbindungselementes (14) mindestens ein aufblasbarer Absperrkörper in eine das erste rohrförmige Bauteil (10) umfassende Rohrleitung (34) eingebracht und aufgeblasen wird.

10. Verfahren nach einem der Ansprüche 7 bis 9,
**dadurch gekennzeichnet, dass**
nach dem Einbringen des mindestens einen Absperrkörpers die Rohrleitung (34) hinter dem mindestes einen Absperrkörper oder zwischen zwei Absperrkörpern aufgetrennt wird, wobei ein erstes Rohrleitungsteil (10 oder 12) und ein weiteres Rohrleitungsteil entsteht.

11. Verfahren nach einem der Ansprüche 7 bis 10,
**dadurch gekennzeichnet, dass** nach dem Verschließen des Befüllstutzens (28) der mindestens eine Absperrkörper aus dem ersten Rohrleitungsteil (10 oder 12) entfernt wird.

12. Verfahren nach einem der Ansprüche 7 bis 11,
**dadurch gekennzeichnet, dass** nach dem Entfernen des mindestens einen Absperrkörpers das Verbindungselement (14) über mindestens eine Schweißnaht (30) mit mindestens einem der beiden Bauteile (10, 12) gasdicht verbunden wird.

13. Verfahren nach einem der Ansprüche 7 bis 12,
**dadurch gekennzeichnet, dass** nach dem gasdichten Verbinden die mindestens eine in einer Tasche (16, 18) aufgenommene Dichtung (20, 22) durch Aufbringen einer Schweißnaht auf die Tasche (16, 18) zerstört wird.

14. Verfahren nach einem der Ansprüche 7 bis 13,
**dadurch gekennzeichnet, dass** die Dichtigkeit der mindestens einen Schweißnaht (30) geprüft wird.
